# FASCICULE DE BREVET EUROPEEN

(11) **EP 0 693 366 B1**
(45) Date de publication et mention de la délivrance du brevet: **12.04.2000**
(21) Numéro de dépôt: 95401391.8
(22) Date de dépôt: 15.06.1995
(51) Int. Cl.: B32B 17/10, C03C 27/12

(54) **METHODE DE FABRICATION D'UN VITRAGE FEUILLETE EQUIPE D'UNE BANDE PERIPHERIQUE**
VERFAHREN ZUR HERSTELLUNG EINER MIT EINEM AUSSENBAND AUSGERÜSTETEN VERBUNDGLASSCHEIBE
METHOD FOR MAKING A LAMINATED GLASS EQUIPPED WITH A PERIPHERAL BAND

(30) Priorité: 16.06.1994 FR 9407379
(43) Date de publication de la demande: 24.01.1996
(73) Titulaire: SAINT-GOBAIN VITRAGE, 92400 Courbevoie (FR)
(72) Inventeur: Leray, Stéphane, F-45600 Sully sur Loire (FR); Janvier, Patrick, F-45600 Sully sur Loire (FR); Naoumenko, Yves, F-45460 Bray en Val (FR)
(74) Mandataire: Le Vaguerèse, Sylvain Jacques

(56) Documents cités:
- EP-A- 0 014 141
- EP-A- 0 490 580
- US-A- 3 410 739
- US-A- 3 671 370
- US-A- 4 046 951

## Description

La présente invention concerne une méthode de fabrication d'un vitrage feuilleté comprenant au moins une feuille rigide et une feuille en matière plastique souple et, plus particulièrement, d'un vitrage fabriqué en série réduite équipé d'une bande périphérique.

Les vitrages fabriqués en série réduite sont les vitrages utilisés dans le domaine aéronautique, ferroviaire et/ou les vitrages blindés, les pare-brise chauffants ou, de manière générale les vitrages nécessitant une fabrication particulière.

Ces vitrages feuilletés peuvent être dits symétriques lorsqu'ils comportent deux feuilles rigides en tant que feuilles extérieures. Ils peuvent également être dits asymétriques lorsqu'ils comportent une feuille rigide et une feuille en matière plastique souple en tant que feuilles extérieures.

Ces feuilles en matière plastique souple entrant dans la constitution d'un vitrage feuilleté visent à améliorer les propriétés du vitrage. Il peut s'agir, par exemple, d'une matière plastique du type polyuréthane utilisée en tant que feuille extérieure afin de conférer, notamment, au vitrage des propriétés de surface telles que résistance à la rayure, protection anti-éclat. Il peut également s'agir d'intercalaires en polyuréthane ou en polyvinylbutyral ou en toute autre matière. Un intercalaire en polyvinylbutyral améliore, en particulier, l'absorption au choc du vitrage.

L'assemblage des feuilles entrant dans la constitution d'un vitrage fabriqué en série réduite comprend, de façon usuelle, les étapes suivantes : on place tout d'abord lesdites feuilles dans une poche, fermée hermétiquement, mise sous vide. On place ensuite cette poche dans un autoclave au sein duquel la pression est comprise, en particulier, entre 800 et 1400 kPa (entre 8 et 14 bars), la température étant comprise entre 100 et 140°C. Au cours de la cuisson dans l'autoclave, la matière plastique souple a tendance à fluer sous l'action de la température, ce qui peut provoquer des débordements sur le chant du vitrage.

Après l'assemblage, un mastic de finition et/ou de protection est usuellement appliqué sur au moins une partie du pourtour du vitrage. L'application de ce mastic est particulièrement longue car elle nécessite plusieurs étapes : la pose de caches sur les zones qui ne sont pas destinées à être recouvertes de mastic, en particulier la périphérie des faces des feuilles extérieures, l'application du mastic proprement dite, une finition à la spatule et l'enlèvement des caches. Cette technique nécessite en outre un traitement de polymérisation du mastic.

L'invention a pour but de faciliter la fabrication d'un vitrage feuilleté comportant une bande de finition et/ou de protection périphérique qui constitue une barrière à tout débordement éventuel de la matière plastique souple, débordement dû au fluage de la matière plastique sous l'action de la température lors de la cuisson dans l'autoclave.

L'invention concerne une méthode de fabrication d'un vitrage feuilleté comprenant au moins une feuille rigide et une feuille en matière plastique souple, méthode selon laquelle on applique, avant la cuisson dans l'autoclave des feuilles entrant dans la constitution du vitrage, une bande périphérique sur au moins une partie du chant du vitrage, ladite bande étant constituée de deux couches. Cette méthode est définie à la revendication 1. Selon une forme préférée, la bande comporte une couche interne en un matériau dont la température de ramollissement est inférieure à la température utilisée lors de la cuisson dans l'autoclave des feuilles constituant le vitrage et une couche externe en un matériau dont la température de ramollissement est supérieure à la température utilisée lors de la cuisson dans l'autoclave desdites feuilles. Cette bande est maintenue, au moins temporairement, sur le vitrage à l'aide de tout moyen approprié, notamment à l'aide de ruban(s) adhésif(s). Ces moyens peuvent être enlevés après l'assemblage, la bande périphérique étant fixée au vitrage à l'aide, notamment, de la couche interne.

La bande périphérique est appliquée, selon l'invention, avant la cuisson dans l'autoclave, en particulier en regard d'au moins une feuille en matière plastique souple entrant dans la constitution du vitrage. La bande périphérique selon l'invention est laissée sur le vitrage après la cuisson dans l'autoclave et, en particulier, lors de l'utilisation du vitrage. La couche externe constitue ainsi à la fois une barrière s'opposant à tout débordement de la feuille en matière plastique souple et une bande de finition et/ou de protection.

Une bande de finition est particulièrement utile lorsque le vitrage feuilleté comprend plus de deux feuilles rigides, notamment lorsqu'il s'agit d'un vitrage blindé. Dans ce cas, les feuilles présentent souvent, après assemblage, un défaut d'alignement inesthétique et pouvant éventuellement gêner le montage ultérieur dudit vitrage dans la baie. La présence de la bande périphérique selon l'invention permet d'obtenir un chant de vitrage lisse, exempt de décrochements, d'un aspect fini.

Par ailleurs, selon une variante avantageuse, la bande de l'invention constitue une bande de protection mécanique des bords du vitrage susceptible d'absorber les éventuels chocs ou heurts auxquels peut être soumis le vitrage. La bande constitue, en outre, avantageusement une barrière étanche à l'eau et à la vapeur d'eau. En effet, la présence d'humidité peut provoquer un délaminage entre la feuille de matière plastique et la ou les feuille(s) adjacente(s).

Les dimensions de la bande périphérique sont fonction de l'utilisation envisagée. Sa longueur peut être telle que la bande périphérique entoure au moins une partie et, de préférence, tout le périmètre du vitrage. De même, sa largeur peut être telle que la bande recouvre la totalité ou une partie du chant du vitrage ; elle peut également, éventuellement, déborder sur une ou les deux faces du vitrage. Elle recouvre, de préférence, au moins une tranche d'une feuille en matière plastique souple, susceptible de fluer lors de la cuisson dans l'autoclave. Toutefois, l'épaisseur de la bande périphérique est, de préférence, inférieure à 3 mm afin d'éviter l'introduction d'une surcote notable susceptible de gêner le montage du vitrage sur son support : il est évident que le vitrage possède des dimensions précises devant correspondre à l'emplacement prévu dans la baie de carrosserie, par exemple. Toutefois, une épaisseur non suffisante risque d'altérer les propriétés requises de la bande. Son épaisseur est, de préférence, comprise entre 0,8 et 3 mm.

La couche externe est en un matériau dont la température de ramollissement est supérieure à la température utilisée lors de la cuisson dans l'autoclave. Elle constitue ainsi une butée à tout écoulement éventuel de la feuille en matière plastique souple. Pour des conditions usuelles d'utilisation, à savoir une température d'autoclave comprise entre 100 et 140°C, la température de ramollissement de la bande extérieure est, par exemple, comprise entre 145 et 190°C. Par ailleurs, le matériau constituant cette couche externe possède des propriétés mécaniques suffisantes pour à la fois corriger et s'adapter à d'éventuels défauts d'alignement. Sa dureté est, par exemple, comprise entre 70 et 90 Shore A. De préférence, il présente un allongement à la rupture par exemple supérieur à 500 % et sa contrainte à la rupture est supérieure à 10 MPa, ces valeurs étant mesurées selon la norme NF T 46-002 sur des éprouvettes du type Haltère H₃. Par ailleurs, il présente un allongement supérieur à 200 % et un module d'Young initial compris entre 200 et 300 MPa, ces valeurs étant mesurées à une température de -40°C selon la norme NF T-46.002. Cette caractéristique permet d'éviter l'endommagement du vitrage soumis à des basses températures.

Le matériau constituant la couche externe est compatible avec tout matériau destiné à être à son contact, aussi bien la couche interne que, par exemple, un cordon de colle utilisé pour fixer le vitrage à une baie de carrosserie et/ou du matériau utilisé pour constituer un joint d'étanchéité et/ou de montage, par exemple un joint encapsulé ou extrudé.

Ce matériau constituant la couche externe est, avantageusement, imperméable à l'eau et à la vapeur d'eau. Il s'agit d'un élastomère thermoplastique ou d'un composé choisi, notamment, dans le groupe constitué du polychlorure de vinyle, des polyuréthanes thermoplastiques, du caoutchouc, du Néoprène ou encore du poly(téréphtalate d'éthylène) (PET).

Cette couche externe est fixée aux feuilles entrant dans la constitution du vitrage à l'aide d'une couche interne qui est susceptible de se ramollir lors de la cuisson dans l'autoclave desdites et d'adhérer auxdites feuilles. Dans des conditions usuelles d'utilisation - la température étant comprise entre 100 et 140°C - la température de ramollissement du matériau constituant la couche interne est comprise entre 80 et 140°C. L'adhésion de la bande périphérique au vitrage est d'autant meilleure que le matériau est susceptible de remplir, en quelque sorte, les éventuelles lacunes existantes du fait d'un défaut d'alignement des feuilles constituant le vitrage.

La bande périphérique étant appliquée sur les feuilles avant la cuisson dans l'autoclave dudit vitrage, il est nécessaire, notamment lorsque la bande entoure toute la périphérie du vitrage, d'aménager des passages pour que les gaz dégagés lors de l'assemblage s'échappent. Selon une variante avantageuse, le matériau constituant la couche interne est perméable à l'air et à la vapeur d'eau permettant ainsi à ces gaz de s'échapper sans nuire à la qualité de l'assemblage. Eventuellement, des moyens accessoires peuvent être utilisés pour faciliter ce dégazage. Ce matériau est, par ailleurs, compatible avec le matériau constituant la couche externe et le matériau constituant la feuille en matière plastique souple.

La partie des feuilles en contact avec la bande périphérique de l'invention peut, éventuellement, être revêtue d'une ou plusieurs couches organique(s) et/ou minérale(s). Il peut s'agir de couches émaillées, métalliques, à base d'oxydes métalliques et à base de silanes ou de siloxanes. Le matériau constituant la couche interne doit alors être compatible avec le matériau constituant la couche avec laquelle il est en contact et, en outre, doit adhérer à ce matériau.

Le matériau constituant la couche interne est, par exemple, du polyvinylbutyral ou du polyuréthane thermoplastique.

Selon une variante de l'invention, la bande périphérique est constituée de deux rubans en deux matériaux différents.

Selon une variante avantageuse, les deux rubans constituant la bande périphérique sont préalablement assemblés, de préférence thermocollés, puis appliqués à l'endroit voulu sur les feuilles constituant le vitrage. Un orifice peut éventuellement être prévu dans la bande afin de faire sortir un élément fonctionnel, tel un élément de connexion électrique hors du vitrage.

L'invention s'applique avantageusement à la fabrication de vitrages comprenant au moins trois feuilles rigides et deux feuilles intercalaires, tels que des vitrages blindés.

D'autres caractéristiques et avantages de l'invention apparaîtront dans la description suivante faite en référence à l'exemple et aux figures dans lesquelles :
- la figure 1 comporte six schémas 1a à 1f, en coupe, représentant différentes positions possibles de la bande selon l'invention avant l'assemblage,
- la figure 2 représente quatre schémas, en coupe, montrant différentes positions possibles de la bande de l'invention fixée à un vitrage blindé après assemblage,
- la figure 3 représente trois schémas montrant différentes variantes de vitrages blindés selon l'invention montés dans un véhicule,
- la figure 4 représente deux schémas d'une sortie d'un élément fonctionnel sur le vitrage nécessitant d'être relié à un équipement hors vitrage.

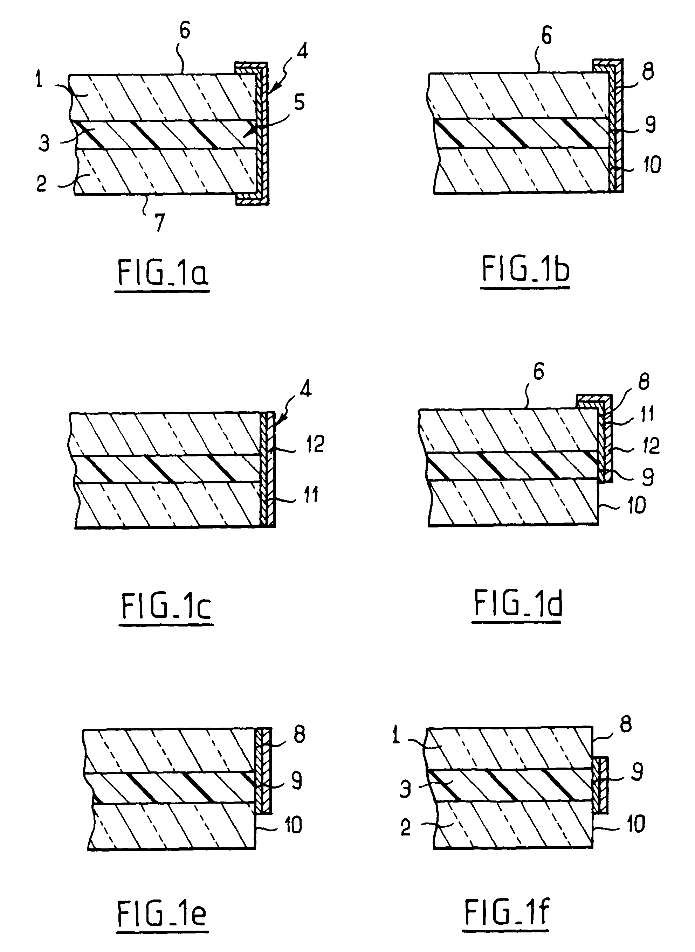

La figure 1 représente différentes réalisations de la bande périphérique selon l'invention appliquée sur un vitrage. Il peut s'agir d'un vitrage feuilleté comportant deux feuilles rigides 1 et 2 en verre minéral ou organique, entre lesquelles est intercalée une feuille 3 en matière plastique souple. La bande périphérique 4 selon l'invention peut recouvrir la totalité du chant 5 du vitrage et recouvrir, au moins partiellement, les faces 6 et 7 des feuilles 1 et 2 respectivement, comme représenté sur le schéma 1a. Elle peut également ne recouvrir partiellement qu'une des faces du vitrage, par exemple la face 6, comme représenté sur le schéma 1b ou ne déborder ni sur la face 6 ni sur la face 7, comme représenté sur le schéma 1c.

La bande périphérique 4 peut également ne recouvrir qu'une partie du chant du vitrage, comme illustré sur les schémas 1d à 1f. Toutefois, la bande recouvre au moins la totalité de la tranche de la feuille 3, en matière plastique souple, de manière à empêcher un débordement de cet intercalaire 3 sur le chant du vitrage lors de la cuisson dans l'autoclave. La bande périphérique 4 peut recouvrir la totalité de la tranche 8 d'une des feuilles rigides 1 ou 2, par exemple la feuille 1, ainsi que toute la tranche 9 de l'intercalaire 3 et ne recouvrir qu'une partie de la tranche 10 de l'autre feuille rigide, par exemple 1a feuille 2, comme représenté sur les schémas 1d et 1e. Selon le schéma 1d, la bande déborde sur la face 6 de la feuille 1. Elle peut également ne pas déborder, comme représenté sur le schéma 1e. La bande périphérique peut également ne recouvrir que la tranche 9 de l'intercalaire 3. Pour des raisons de commodité et assurer une meilleure adhésion, elle déborde de préférence sur les tranches 8 et 10 des feuilles 1 et 2 respectivement, comme illustré sur le schéma 1f.

Seules quelques dispositions de la bande 4 sont illustrées sur ces schémas. Il est bien entendu que la bande peut recouvrir tout le périmètre du vitrage ou une partie de ce périmètre, indépendamment de la largeur du chant recouvert.

La bande 4 est constituée, dans les structures décrites, de deux rubans 11 1 et 12 préassemblés. Le ruban 12, dit ruban externe, est en un matériau dit dur qui ne se ramollit pas lors de la cuisson à l'autoclave du vitrage, alors que le ruban 11, dit ruban interne, est susceptible de se ramollir lors de cette même cuisson.

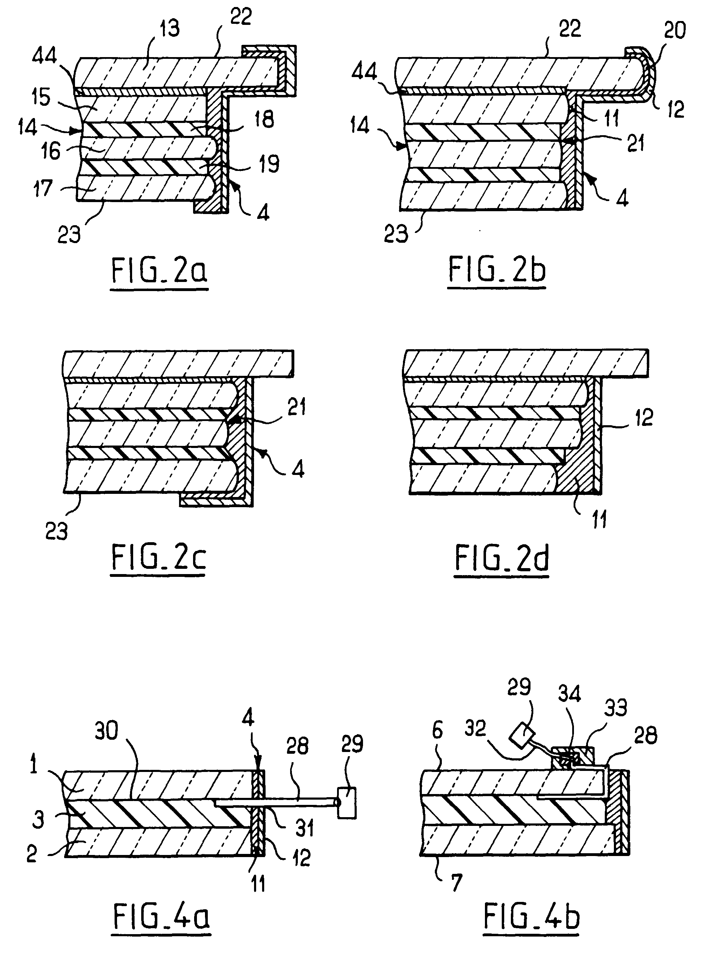

La figure 2 représente une application avantageuse de la bande périphérique à un vitrage blindé. Un vitrage blindé est constitué, usuellement, d'une feuille rigide extérieure en verre minéral 13 s'étendant au-delà de la périphérie d'un bloc blindé 14 sur lequel elle est collée par l'intermédiaire d'une couche adhésive 44. Ce bloc blindé est constitué d'une multiplicité de feuilles rigides 15, 16, 17 entre lesquelles sont intercalées des feuilles en matière plastique souple 18 et 19. Pour des raisons de commodité, seules trois feuilles rigides et deux intercalaires sont représentés. Leur nombre peut aller jusqu'à huit feuilles rigides. La bande périphérique 4 peut recouvrir la totalité du chant du vitrage, c'est-à-dire la tranche 20 de la feuille rigide 13 ainsi que le chant 21 du bloc blindé, comme représenté sur les schémas 2a et 2b. Elle peut aussi, selon une variante avantageuse ne recouvrir que le chant 21 du bloc blindé, comme représenté sur les schémas 2c et 2d. La bande 4 peut également déborder sur les deux faces 22 et 23 du vitrage, comme illustré sur le schéma 2a, ou ne déborder que sur une face, comme représenté sur les schémas 2b et 2c. Elle peut également ne déborder sur aucune face du vitrage, comme représenté sur le schéma 2d.

La bande 4 est constituée de deux rubans 11 et 12. Le ruban 12, dit ruban externe, est par exemple en un polyuréthane dont le point de ramollissement est de l'ordre de 180°C. Il est de préférence coloré, par exemple, en noir. Sa dureté est, par exemple, de l'ordre de 85 ± 5 Shore A. Il allie ainsi à la fois une rigidité afin de corriger les défauts d'alignement des feuilles 15 à 19 constituant le bloc blindé et une souplesse pour s'adapter à ce défaut d'alignement, ceci en combinaison avec le ruban interne. Il est fixé au vitrage à l'aide du ruban 11. Le ruban 11 est, par exemple, du polyuréthane dont le point de ramollissement est de l'ordre de 100°C. Il est, par exemple, incolore.

L'épaisseur du ruban 11 est, par exemple, comprise entre 0,30 et 1,5 mm ; l'épaisseur du ruban 12 est, quant à elle, comprise entre 0,5 et 1 mm, ces deux épaisseurs étant celles avant la cuisson à l'autoclave.

Lors de la cuisson à l'autoclave, le matériau constituant le ruban 11 flue, comblant en quelque sorte les trous du fait du mauvais alignement des feuilles constituant le bloc blindé. L'adhésion en est d'autant améliorée.

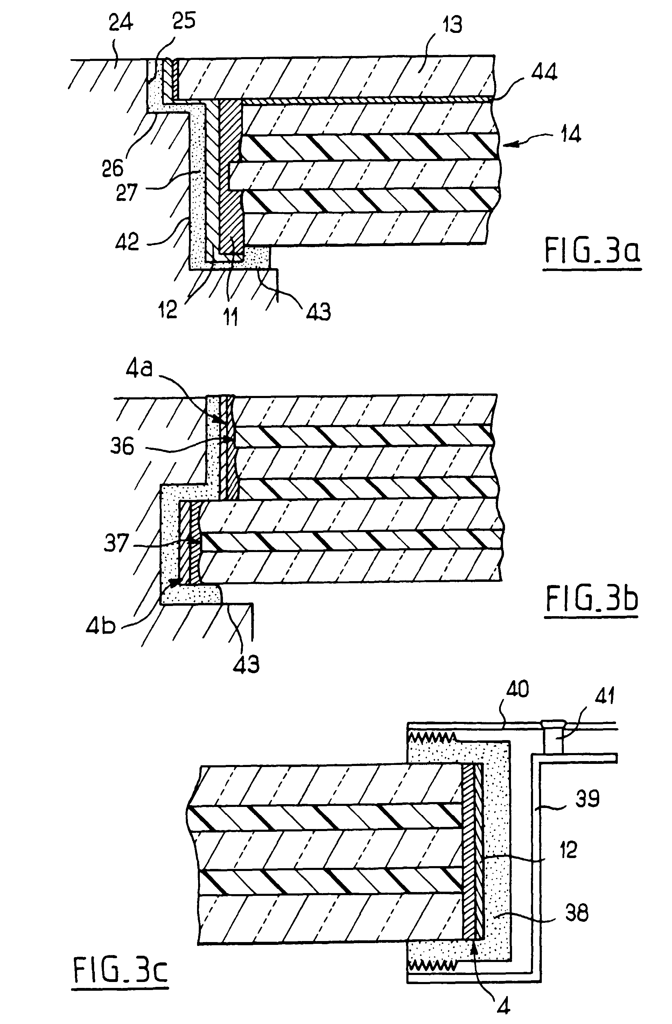

La figure 3 illustre différents schémas de vitrages blindés montés dans une baie de carrosserie comprenant des parois 24, 25, 26, 42, 43. Le schéma 3a illustre un vitrage blindé monté dans une baie. La feuille 13 affleure à la paroi 24 de la baie de carrosserie. Le vitrage est collé à la baie à l'aide d'un cordon de colle 27. Il s'agit d'un mastic en polyuréthane ou d'un joint en silicone. Le cordon de colle 27 est en contact avec la bande 4 de l'invention et la paroi de la baie 42. La bande 4, en particulier le ruban 12, présente alors à la fois une compatibilité avec le cordon de colle 27 et une adhérence avec ce cordon de colle.

Le schéma 3b illustre une autre variante selon laquelle deux bandes périphériques de l'invention, 4a et 4b, sont appliquées sur deux chants 36 et 37 d'un ensemble de feuilles constituant un vitrage. Sur ce schéma, le chant 36 est le chant constitué par les tranches de deux feuilles rigides et de deux feuilles en matière plastique souple. Quant au chant 37, il est constitué des tranches de deux feuilles rigides et d'une feuille souple en matière plastique.

Le schéma 3c représente un vitrage autour duquel est monté, sur au moins une partie de sa périphérie, un joint 38. Ce joint peut être surmoulé, extrudé ou rapporté et fixé sur le vitrage. Le ruban externe 12 est alors compatible avec le matériau constituant ce joint et présente, éventuellement, une adhérence vis-à-vis de celui-ci. Un cadre 39 et une applique 40 peuvent être montés à proximité du vitrage afin de le rigidifier. Le cadre et l'applique sont assemblés à l'aide d'un moyen de fixation 41, tel qu'une vis.

La figure 4 représente une autre variante de l'invention. Il s'agit d'un vitrage feuilleté, éventuellement blindé, chauffant. Une amenée de courant 28 relie le réseau chauffant, non représenté, à un équipement hors vitrage, par exemple à une source d'alimentation schématisée en 29. Cette amenée de courant est, de préférence, noyée dans l'intercalaire 3 en matière plastique souple au voisinage de la face 30 de la feuille de verre rigide 1. Il s'agit, par exemple, d'un clinquant, notamment d'une mince bande de cuivre étamée. Le chant du vitrage est recouvert d'une bande périphérique 4 selon l'invention. Sur le schéma 4a, un orifice 31 est aménagé dans cette bande afin de faire sortir hors du vitrage l'amenée de courant 28. Le schéma 4b représente une autre variante, selon laquelle un élément de connexion est prévu afin de connecter cette amenée de courant à un câble 32 lié à la source d'alimentation 29. Cet élément de connexion est, par exemple, un élément 33 fixé ou collé sur une face 6 ou 7 du vitrage, constitué d'un boîtier en matière plastique dans lequel se trouve un domino 34 permettant le raccordement du câble 32 à l'amenée de courant 28.

On peut illustrer les propriétés d'adhésion de la couche interne sur le chant du vitrage, en particulier ses propriétés adhésives vis-à-vis d'une feuille souple en matière plastique et vis-à-vis de la tranche d'une feuille de verre. Une bonne adhésion permet d'obtenir une bonne fixation de la bande périphérique sur le chant du vitrage et améliore, en outre, la fonction de barrière contre les débordements de la matière plastique souple lors de l'assemblage des feuilles entrant dans la constitution du vitrage. Par ailleurs, une bonne adhésion améliore l'étanchéité du vitrage.

Les valeurs d'adhésion, mesurées pour un ruban interne utilisable selon l'invention, sont supérieures ou égales à 6,4 daN sur la tranche d'une feuille de verre et supérieures ou égales à 20 daN sur la tranche d'une feuille en matière plastique souple.

Ces valeurs sont mesurées selon la méthode dite « Test de peeling ».

Deux languettes constituées d'un ruban interne à mettre en oeuvre selon l'invention sont fabriquées. Elles sont constituées d'un ruban interne en polyuréthane, d'une épaisseur d'environ 1,20 mm, dont le point de ramollissement est égal à 125°C et d'un ruban externe en polyuréthane, d'une épaisseur d'environ 0,6 mm, dont le point de ramollissement est égal à 180°C. Ces deux rubans sont thermocollés. La largeur des languettes est égale à 1 cm. Une languette est déposée sur une face d'une plaque de verre dépoli, reproduisant les caractéristiques d'une tranche d'une feuille de verre, tandis que l'autre éprouvette est déposée sur une face d'une feuille en matière plastique souple, en l'occurrence une feuille de polyvinylbutyral. On soumet chaque ensemble constitué de la plaque munie de la languette à une température d'au moins 150°C reproduisant les caractéristiques de cuisson dans l'autoclave d'un vitrage feuilleté. Les languettes sont alors tirées à une vitesse constante de 2 cm/min perpendiculairement à la plaque de verre ou à la feuille de polyvinylbutyral. La température est de 20 ± 1 °C.

Une force de 6,4 daN est nécessaire pour décoller la languette fixée sur la feuille de verre. Quant à la languette déposée sur la feuille en polyvinylbutyral, on observe une décohésion des matériaux en présence avant un décollement de la languette.

Le même test est effectué sur une deuxième languette qui a subi un vieillissement accéléré pendant 15 jours à 54°C sous une humidité relative de 100 %. La force nécessaire pour décoller l'éprouvette fixée sur la feuille de verre est alors égale à 1,5 daN. Quant à la languette déposée sur la feuille en polyvinylbutyral, on observe une décohésion des matériaux en présence avant un décollement de la languette.

Ces tests mettent en évidence les propriétés adhésives de la bande périphérique.

## Revendications

1. Méthode de fabrication d'un vitrage feuilleté comprenant au moins une feuille rigide et une feuille en matière plastique souple selon laquelle on applique, sur au moins une partie du chant du vitrage, une bande périphérique constituée de deux couches, préassemblées, en deux matériaux différents, avant la cuisson dans l'autoclave des feuilles entrant dans la constitution du vitrage, les matériaux étant choisis pour assurer la finition et/ou la protection du chant du vitrage et cette bande étant maintenue, au moins temporairement, sur le chant du vitrage à l'aide de tout moyen adéquat, notamment à l'aide de ruban(s) adhésif(s).

2. Méthode selon la revendication 1, dans laquelle on applique, sur au moins une partie du chant du vitrage en regard d'au moins une tranche d'une feuille en matière plastique souple, une bande périphérique comprenant deux couches en deux matériaux différents, une première couche dite couche interne en un matériau dont la température de ramollissement est inférieure à la température utilisée lors de la cuisson dans l'autoclave des feuilles entrant dans la constitution du vitrage et une deuxième couche dite couche externe en un matériau dont la température de ramollissement est supérieure à la température utilisée dans l'autoclave pour la cuisson desdites feuilles.

3. Méthode selon la revendication 2, caractérisée en ce que la température de ramollissement du matériau constituant la couche interne est comprise entre 80 et 140°C.

4. Méthode selon la revendication 3, caractérisée en ce que le matériau constituant la couche interne est choisi parmi le polyvinylbutyral ou le polyuréthane thermoplastique.

5. Méthode selon la revendication 2, caractérisée en ce que la température de ramollissement du matériau constituant la couche externe est comprise entre 145 et 190°C.

6. Méthode selon la revendication 5, caractérisée en ce que le matériau constituant la couche externe est un élastomère thermoplastique.

7. Méthode selon la revendication 5, caractérisée en ce que le matériau constituant la couche externe est choisi dans le groupe comprenant du polychlorure de vinyle, des polyuréthanes thermoplastiques ou thermodurcissables, du poly(téréphtalate d'éthylène) (PET), du Néoprène, du caoutchouc, une résine époxy ou un tissu de verre enduit.

8. Méthode selon l'une des revendications précédentes, caractérisée en ce que les deux ouches sont des rubans.

9. Méthode selon la revendication 8, caractérisée en ce que les deux rubans sont thermocollés.

10. Méthode selon l'une des revendications précédentes, caractérisée en ce que l'épaisseur de la bande périphérique est inférieure à 3 mm.

11. Méthode selon l'une des revendications précédentes, caractérisée en ce qu'un orifice est aménagé dans la bande périphérique afin de faire sortir un élément fonctionnel nécessitant d'être relié à des équipements hors vitrage, cet élément fonctionnel étant, par exemple, une amenée de courant.

12. Méthode selon l'une des revendications précédentes, caractérisée en ce que le vitrage est un vitrage blindé.

## Claims

1. Method for the manufacture of a laminated glazing comprising at least one rigid sheet and a flexible, plastics material sheet according to which application takes place to at least part of the edge of the glazing of a peripheral strip constituted by two preassembled layers of two different materials, prior to annealing in the autoclave of sheets entering into the constitution of the glazing, the materials being chosen so as to ensure the finish and/or protection of the edge of the glazing, said strip being at least temporarily kept on the edge of the glazing by any adequate means, particularly with the aid of adhesive tape or tapes.

2. Method according to claim 1, wherein application takes place to at least part of the edge of the glazing facing at least one section of a flexible, plastics material sheet, of a peripheral strip comprising two layers of two different materials, a first layer, known as the inner layer being of a material whose softening point is below the temperature used during annealing in the autoclave of the sheets entering into the constitution of the glazing and a second layer, called the outer layer of a material, whose softening point is above the temperature used in the autoclave for annealing said sheets.

3. Method according to claim 2, characterized in that the softening point of the material constituting the inner layer is between 80 and 140°C.

4. Method according to claim 3, characterized in that the material constituting the inner layer is chosen from among thermoplastic polyurethane or polyvinyl butyral.

5. Method according to claim 2, characterized in that the softening point of the material constituting the outer layer is between 145 and 190°C.

6. Method according to claim 5, characterized in that the material constituting the outer layer is a thermoplastic elastomer.

7. Method according to claim 5, characterized in that the material constituting the outer layer is chosen from within the group comprising polyvinyl chloride, thermosetting or thermoplastic polyurethanes, polyethylene terephthalate (PET) Neoprene, rubber, an epoxy resin or a coated glass fabric.

8. Method according to one of the preceding claims, characterized in that the two layers are ribbons.

9. Method according to claim 8, characterized in that the two ribbons are thermally adhered.

10. Method according to one of the preceding claims, characterized in that the thickness of the peripheral strip is less than 3 mm.

11. Method according to one of the preceding claims, characterized in that an orifice is made in the peripheral strip, so as to pass out a functional element which has to be connected to equipment outside the glazing, said functional element e.g. being a current lead.

12. Method according to one of the preceding claims, characterized in that the glazing is an armoured glazing.

## Patentansprüche

1. Verfahren zur Herstellung einer Verbundverglasung, die mindestens eine starre Scheibe und eine Folie aus nachgiebigem Kunststoff umfaßt, gemäß welchem vor dem Aushärten im Autoklaven der Scheibe/n und Folie/n, welche die Bestandteile der Verglasung bilden, auf wenigstens einem Teil der Kante der Verglasung ein Umfangsband aufgebracht wird, das aus zwei vorher miteinander verbundenen Schichten aus zwei unterschiedlichen Materialien besteht, die ausgewählt sind, den Abschluß und/oder Schutz der Kante der Verglasung sicherzustellen, wobei dieses Band wenigstens zeitweise mit Hilfe eines adäquaten Mittels, insbesondere eines (mehrerer) Klebebandes (Klebebänder), auf der Kante der Verglasung festgehalten wird.

2. Verfahren nach Anspruch 1, in welchem auf wenigstens einem Teil der Kante der Verglasung an mindestens einem Rand einer Folie aus nachgiebigem Kunststoff ein Umfangsband aufgebracht wird, das zwei Schichten aus unterschiedlichen Materialien umfaßt, eine als Innenschicht bezeichnete erste Schicht aus einem Material, dessen Erweichungstemperatur niedriger als die Temperatur ist, welche beim Aushärten der Scheibe/n und Folie/n, welche die Bestandteile der Verglasung bilden, im Autoklaven angewendet wird, und eine als Außenschicht bezeichnete zweite Schicht aus einem Material, dessen Erweichungstemperatur höher als die Temperatur ist, welche beim Aushärten dieser Scheibe/n und Folie/n im Autoklaven angewendet wird.

3. Verfahren nach Anspruch 2, **dadurch gekennzeichnet, daß** die Erweichungstemperatur des Materials, das die Innenschicht bildet, 80 bis 140 °C beträgt.

4. Verfahren nach Anspruch 3, **dadurch gekennzeichnet, daß** das Material, welches die Innenschicht bildet, aus Polyvinylbutyral oder thermoplastischem Polyurethan ausgewählt ist.

5. Verfahren nach Anspruch 2, **dadurch gekennzeichnet, daß** die Erweichungstemperatur des Materials, das die Außenschicht bildet, 145 bis 190 °C beträgt.

6. Verfahren nach Anspruch 5, **dadurch gekennzeichnet, daß** das Material, welches die Außenschicht bildet, ein thermoplastisches Elastomer ist.

7. Verfahren nach Anspruch 5, **dadurch gekennzeichnet, daß** das Material, welches die Außenschicht bildet, aus der Gruppe ausgewählt ist, die Polyvinylchlorid, thermoplastische oder duroplastische Polyurethane, Polyethylenterephthalat (PET), Neopren, Kautschuk, ein Epoxidharz oder beschichtetes Glasgewebe umfaßt.

8. Verfahren nach einem der vorhergehenden Ansprüche, **dadurch gekennzeichnet, daß** die zwei Schichten Bänder sind.

9. Verfahren nach Anspruch 8, **dadurch gekennzeichnet, daß** die zwei Bänder heißverklebt sind.

10. Verfahren nach einem der vorhergehenden Ansprüche, **dadurch gekennzeichnet, daß** die Dicke des Umfangsbandes kleiner als 3 mm ist.

11. Verfahren nach einem der vorhergehenden Ansprüche, **dadurch gekennzeichnet, daß** eine Öffnung im Umfangsband angebracht ist, um ein Funktionselement austreten zu lassen, das an Ausrüstungen außerhalb der Verglasung anzuschließen ist und beispielsweise eine Stromzuführung ist.

12. Verfahren nach einem der vorhergehenden Ansprüche, **dadurch gekennzeichnet, daß** die Verglasung ein Panzerglas ist.
